# EUROPÄISCHE PATENTANMELDUNG

(11) **EP 3 903 983 A1**
(43) Veröffentlichungstag der Anmeldung: **03.11.2021**
(21) Anmeldenummer: 20171974.7
(22) Anmeldetag: 29.04.2020
(51) Int. Cl.: B23K 9/095, B23K 9/12

(54) **SCHWEISSVERFAHREN UND SCHWEISSVORRICHTUNG ZUR DURCHFÜHRUNG EINES SCHWEISSVERFAHRENS**

(71) Anmelder: FRONIUS INTERNATIONAL GmbH, 4643 Pettenbach (AT)
(72) Erfinder: MAYER, Manuel, 4643 Pettenbach (AT); WALDHÖR, Andreas, 4643 Pettenbach (AT); KALTEIS, Wolfgang, 4643 Pettenbach (AT); GRUNWALD, Rick, 4643 Pettenbach (AT)
(74) Vertreter: SONN Patentanwälte OG

(57) **Zusammenfassung**

Die Erfindung betrifft ein Schweißverfahren mit einem abschmelzbaren Schweißdraht (5), insbesondere Kalt-Metall-Transfer-Schweißverfahren zum Auftragsschweißen, sowie eine Schweißvorrichtung (1) zur Durchführung eines solchen Schweißverfahrens. Erfindungsgemäß wird während des Schweißprozesses eine voreingestellte Abschmelzleistung (Ab) des Schweißdrahts (5) im Wesentlichen konstant gehalten, indem der mittlere Drahtvorschub (vₘₑₐₙ) des Schweißdrahts (5) geregelt wird, wobei der aktuelle Drahtvorschub (v(t)) gemessen wird, der mittlere gemessene Drahtvorschub (vₘₑₐₙ) mit einem der gewünschten Abschmelzleistung (Ab) entsprechenden vorgegebenen mittleren Drahtvorschub (v_{soll_mean}) verglichen wird, und entsprechende der Abweichung (Δv) des mittleren gemessenen Drahtvorschubs (vₘₑₐₙ) vom vorgegebenen mittleren Drahtvorschub (v_{soll_mean}) als Regelabweichung Schweißparameter (Pᵢ) verändert werden.

## Beschreibung

Die Erfindung betrifft ein Schweißverfahren mit einem abschmelzbaren Schweißdraht, der einem von einem Schweißroboter geführten Schweißbrenner zugeführt wird, wobei ein Schweißprozess durch zyklische Abwechslung einer Lichtbogenphase und einer Kurzschlussphase gebildet wird, und der Schweißdraht während der Lichtbogenphase bis zur Berührung mit einem Werkstück in Richtung Werkstück bewegt und anschließend nach Bildung eines Kurzschlusses während der Kurzschlussphase die Drahtförderung umgekehrt und der Schweißdraht vom Werkstück wegbewegt wird, und wobei zur Festlegung des Schweißprozesses eine Vielzahl von Schweißparametern eingestellt werden.

Ebenso betrifft die Erfindung eine Schweißvorrichtung, mit einem von einem Schweißroboter geführten Schweißbrenner zur Zuführung eines abschmelzbaren Schweißdrahts zu einem Werkstück, und mit einer Schweißstromquelle zur Durchführung eines Schweißverfahrens, wobei ein Schweißprozess durch zyklische Abwechslung einer Lichtbogenphase und einer Kurzschlussphase gebildet wird, und der Schweißdraht während der Lichtbogenphase bis zur Berührung mit einem Werkstück in Richtung Werkstück bewegt und anschließend nach Bildung eines Kurzschlusses während der Kurzschlussphase die Drahtförderung umgekehrt und der Schweißdraht vom Werkstück wegbewegt wird, und wobei zur Festlegung des Schweißprozesses eine Vielzahl von Schweißparametern einstellbar sind.

Insbesondere das sogenannte Kalt-Metall-Transfer (Cold Metal Transfer CMT)-Schweißverfahren ist Gegenstand der Erfindung, ein Lichtbogenschweißverfahren, bei dem eine Vor-/Rückbewegung des Schweißdrahts mit entsprechenden Schweißparametern kombiniert wird, sodass eine gezielte Ablösung der Tropfen des geschmolzenen Schweißdrahts bei einer Minimierung von Schweißspritzern resultiert. Beispielsweise beschreibt die EP 1 901 874 B1 ein CMT-Schweißverfahren, bei dem eine Bewegungsfrequenz des Schweißdrahts vorgegeben werden kann und die weiteren Schweißparameter automatisch geregelt werden.

CMT-Schweißverfahren können aufgrund der gezielten Materialablösung auch optimal zum Auftragsschweißen, dem sogenannten Cladding, und zur additiven Fertigung von metallischen Formkörpern, dem sogenannten WAAM (Wire Arc Additiv Manufacturing) oder ähnlichen 3D-Druckverfahren eingesetzt werden. Üblicherweise wird bei solchen Schweißverfahren der Schweißstrom als einer der wichtigsten Schweißparameter konstant gehalten und entsprechend geregelt und eine Vielzahl weiterer Schweißparameter, wie die Schweißspannung und die Vorschubgeschwindigkeit des Schweißdrahts, entsprechend der jeweiligen Schweißaufgabe eingestellt und verändert, sodass der gewünschte Schweißstromverlauf resultiert. Bei einer Änderung der freien Drahtlänge des Schweißdrahts, der sogenannte Sickout oder des Abstands des Schweißbrenners zum Werkstück (CTWD Contact Tip to Work Distance), stellen sich wegen dieses Konstantstromverhaltens unterschiedliche Abschmelzleistungen ein. Für spezielle Anwendungen kann somit keine gleichbleibende Abschmelzleistung erzielt werden.

Insbesondere beim Auftragsschweißen und bei der additiven Fertigung ist eine konstante Schichtdicke des aufgetragenen Materials, also eine möglichst gleichbleibende Abschmelzleistung des abschmelzbaren Schweißdrahts wesentlich.

Die Aufgabe der vorliegenden Erfindung besteht daher darin, ein Schweißverfahren und eine Schweißvorrichtung der oben angegebenen Art zu schaffen, durch welche eine im Wesentlichen gleichbleibende Abschmelzleistung erzielt werden kann. Das Schweißverfahren und die Schweißvorrichtung sollen möglichst einfach und kostengünstig implementiert werden können. Nachteile des Standes der Technik sollen vermieden oder zumindest reduziert werden.

Gelöst wird diese Aufgabe in verfahrensmäßiger Hinsicht dadurch, dass während des Schweißprozesses eine voreingestellte Abschmelzleistung des Schweißdrahts im Wesentlichen konstant gehalten wird, indem der mittlere Drahtvorschub des Schweißdrahts geregelt wird, wobei der aktuelle Drahtvorschub gemessen wird, der mittlere gemessene Drahtvorschub mit einem der gewünschten Abschmelzleistung entsprechenden vorgegebenen mittleren Drahtvorschub verglichen wird, und entsprechend der Abweichung des mittleren gemessenen Drahtvorschubs vom vorgegebenen mittleren Drahtvorschub als Regelabweichung Schweißparameter verändert werden. Das Verfahren sieht also eine laufende Überwachung des aktuellen Vorschubs des Schweißdrahts und eine Regelung des mittleren Drahtvorschubs durch entsprechende Veränderung der Schweißparameter in Abhängigkeit der Abweichung des aktuellen Drahtvorschubs vom vorgegebenen Drahtvorschub vor. Dadurch wird ein im Wesentlichen konstanter mittlerer Drahtvorschub und somit eine im Wesentlichen konstante Abschmelzleistung des Schweißdrahts erzielt. Unter der Voraussetzung einer gleichmäßigen Schweißgeschwindigkeit resultiert somit eine gleichmäßige Dicke der Schweißnaht oder beim Auftragsschweißen und bei der additiven Fertigung eine gleichmäßige Dicke der aufgetragenen Materialschicht. Je nach Anwendung des Schweißverfahrens können verschieden viele Schweißparameter zur Festlegung des Schweißprozesses eingestellt und vorgegeben werden.

Vorzugsweise werden die Schweißparameter in Form von Arbeitspunkten für verschiedene Abschmelzleistungen gespeichert und entsprechend der Regelabweichung ausgewählt bzw. zwischen den Arbeitspunkten interpoliert. Diese Anpassung der Regelabweichung wird üblicherweise von einem Schweißprozessregler durchgeführt. Beispielsweise können bis zu 150 verschiedene Werte verschiedener Schweißparameter den jeweiligen Arbeitspunkt oder die sogenannte Schweißkennlinie festlegen. Das erfindungsgemäße Verfahren sieht also eine Verschiebung des Arbeitspunktes bzw. der Schweißkennlinie in Abhängigkeit der Abweichung des aktuellen mittleren Drahtvorschubs vom voreingestellten Drahtvorschub vor. Für bestimmte Regelabweichungen wird ein exakter Arbeitspunkt ausgewählt werden können, wohingegen für andere Regelabweichungen eine Interpolation zwischen vorgegebenen Arbeitspunkte stattfinden wird, welche üblicherweise ebenfalls von einem Schweißprozessregler berechnet wird.

Besonders geeignet ist ein integrierender Regler zum Regeln des mittleren Drahtvorschubs. Ein solcher integrierender Regler wirkt durch zeitliche Integration der Regelabweichung auf die Stellgröße. I-Regler sind zwar relativ langsam, was jedoch bei dieser Anwendung keinen Nachteil bedeutet, und der Regler weist auch keine bleibende Regelabweichung auf. Zudem kann ein I-Regler relativ einfach realisiert werden.

Ebenso denkbar ist die Realisierung des Regelkreises mit einem proportionalen-integrierenden Regler zum Regeln des mittleren Drahtvorschubs. Im Gegensatz zum I-Regler ist der PI-Regler etwas schneller und weist ebenfalls keine Regelabweichung auf. Die schaltungstechnische Realisierung eines PI-Reglers bedeutet ebenfalls einen relativ geringen Aufwand.

Gemäß einem Merkmal der Erfindung wird der aktuelle Drahtvorschub alle 1 µs bis 50 µs, insbesondere alle 25 µs, gemessen. Derartige Abtastwerte haben sich hinsichtlich der Regelgeschwindigkeit und des messtechnischen Aufwands als geeignet herausgestellt.

Der gemessene aktuelle Drahtvorschub kann über eine gewisse Zeitspanne gemittelt werden, um eine Glättung des Signals zu erzielen und falsche Regelantworten auf fehlerhafte Messwerte oder sogenannte Ausreißer, zu vermeiden. Dabei sind Mittelungsintervalle zwischen 10 ms und 1000 ms geeignet. Die Mittelwertbildung kann blockweise oder auch gleitend erfolgen.

Entsprechend der Regelabweichung kann insbesondere der Schweißstrom, die freie Drahtlänge des Schweißdrahts, der Abstand des Kontaktrohrs des Schweißbrenners zum Werkstück (CTWD Contact Tip to Work Distance), und bzw. oder der Anstellwinkel des Schweißbrenners als Schweißparameter verändert werden, um nur einige wenige Schweißparameter zu nennen. Je nach Schweißaufgabe können auch wesentlich mehr Schweißparameter vorgegeben und entsprechend der Regelabweichung verändert werden.

Wenn der mittlere Drahtvorschub mit einer maximal vorgegebenen Anstiegsgeschwindigkeit bzw. slew rate geregelt wird, kann Einfluss auf die Geschwindigkeit der Regelung genommen werden. Beispielsweise können Anstiegsgeschwindigkeiten im Bereich zwischen 0,1 m/min und 1 m/min gewählt werden.

Von Vorteil ist es, wenn der mittlere Drahtvorschub mit einer Hysterese geregelt wird. Bekanntlicherweise kann durch das Vorsehen einer Schalthysterese bei Regelungseinrichtungen die Häufigkeit des Schaltens des Stellglieds reduziert werden, wobei aber gleichzeitig auch größere Schwankungen der Regelgröße in Kauf genommen werden.

Wenn Regelgrenzen für die Regelung des mittleren Drahtvorschubs erreicht werden, kann die Schweißgeschwindigkeit verändert werden und trotz Erreichens der Regelgrenzen eine Konstanthaltung der Abschmelzleistung des abschmelzbaren Schweißdrahts bzw. eine Konstanthaltung des mittleren Drahtvorschubs erzielt werden. Bei Erreichen der Regelgrenzen kann also die Schweißgeschwindigkeit durch entsprechende Ansteuerung des Schweißroboters angepasst und beispielsweise beim Auftragsschweißen trotzdem noch eine gleichbleibende Schichtdicke erzielt werden. Andererseits können auch bewusst Regelgrenzen gesetzt werden, um die Regelung des mittleren Drahtvorschubs bzw. der Abschmelzleistung nur in bestimmten Grenzen zu ermöglichen.

Die Regelung des mittleren Drahtvorschubs kann auch deaktiviert werden, um bei bestimmten Schweißanwendungen die erfindungsgemäße Regelung des mittleren Drahtvorschubs abschalten zu können.

Gelöst wird die erfindungsgemäße Aufgabe auch durch eine oben genannte Schweißvorrichtung, wobei eine Eingabeeinheit zur Eingabe oder Auswahl einer gewünschten Abschmelzleistung des Schweißdrahts, eine Messeinrichtung zur Messung des aktuellen Drahtvorschubs und eine Regelungseinrichtung zur Regelung des mittleren Drahtvorschubs des Schweißdrahts zur Konstanthaltung der gewünschten Abschmelzleistung vorgesehen ist, wobei die Regelungseinrichtung zum Vergleich des mittleren gemessenen Drahtvorschubs mit einem der voreingestellten Abschmelzleistung entsprechenden vorgegebenen mittleren Drahtvorschub und zur Veränderung von Schweißparametern entsprechend der Abweichung des mittleren gemessenen Drahtvorschubs vom vorgegebenen mittleren Drahtvorschub als Regelabweichung ausgebildet ist. Eine derartige Schweißvorrichtung ist relativ einfach und kostengünstig implementierbar. Zu den dadurch erzielbaren Vorteilen wird auf die obige Beschreibung des Schweißverfahrens verwiesen.

Vorteilhafterweise ist eine mit der Regelungseinrichtung verbundene Datenbank zur Ablage der Schweißparameter in Form von Arbeitspunkten für verschiedene Abschmelzleistungen vorgesehen. Diese Datenbank besitzt für verschiedenste Drahtvorschubgeschwindigkeiten eine Vielzahl an Werten für die verschiedensten Schweißparameter. Zwischen den Arbeitspunkten findet eine Interpolation der Schweißparameter statt, welche beispielsweise vom Prozessregler durchgeführt wird.

Die Regelungseinrichtung weist vorzugsweise einen integrierenden Regler (I-Regler) oder einen proportionalen-integrierenden Regler (PI-Regler) auf.

Weiters kann die Regelungseinrichtung zur Regelung des mittleren Drahtvorschubs mit einer maximal vorgegebenen Anstiegsgeschwindigkeit bzw. slew rate ausgebildet sein, um Einfluss auf die Geschwindigkeit der Regelung nehmen zu können.

Vorteilhafterweise ist die Regelungseinrichtung zur Regelung des mittleren Drahtvorschubs mit einer Hysterese ausgebildet.

Die Regelungseinrichtung ist insbesondere zur Veränderung des Schweißstroms, der freien Drahtlänge des Schweißdrahts, des Abstands des Kontaktrohrs des Schweißbrenners zum Werkstück (CTWD Contact Tip to Work Distance), und bzw. oder des Anstellwinkels des Schweißbrenners als Schweißparameter entsprechend der Regelabweichung ausgebildet.

Wenn die Regelungseinrichtung mit dem Schweißroboter verbunden ist, kann die Schweißgeschwindigkeit bei Erreichen von Regelgrenzen für die Regelung des mittleren Drahtvorschubs verändert werden, um auch über die Regelgrenzen hinaus eine Konstanthaltung der Abschmelzleistung erzielen zu können.

Wenn die Eingabeeinheit ein Einstellorgan zur Deaktivierung der Regelungseinrichtung aufweist, kann die erfindungsgemäße Regelung und Konstanthaltung der Abschmelzleistung auch bei Bedarf abgeschaltet werden.

Beispielsweise kann die Eingabeeinheit durch einen Touchscreen gebildet sein, auf dem auch ein entsprechender Bereich als Einstellorgan zur Deaktivierung vorgesehen sein kann. Derartige Touchscreens stellen also eine kombinierte Ein-/Ausgabeeinheit der Schweißvorrichtung dar und erleichtern dem Schweißer die Bedienung der Schweißvorrichtung.

Die Eingabeeinheit kann auch oder zusätzlich durch einen Fernregler gebildet sein, um den Schweißprozess aus der Ferne überwachen bzw. bestimmte Einstellungen aus der Ferne vornehmen zu können.

Die vorliegende Erfindung wird anhand der beigefügten Zeichnungen näher erläutert. Darin zeigen
- Fig. 1: ein Blockschaltbild einer Schweißvorrichtung mit einer Regelungseinrichtung zur Regelung des Drahtvorschubs;
- Fig. 2A und 2B: eine Gegenüberstellung der bisherigen Regelstrategie und der neuen Regelstrategie;
- Fig. 3: eine Ausführungsform einer Regelungseinrichtung mit einem I-Regler;
- Fig. 4: eine weitere Ausführungsform einer Regelungseinrichtung mit einem PI-Regler;
- Fig. 5: Zeitdiagramme des mittleren Drahtvorschubs, des Schweißstroms und der Schweißspannung eines Schweißprozesses des Standes der Technik, bei dem der Schweißstrom im Wesentlichen konstant gehalten wird; und
- Fig. 6: Zeitdiagramme der Stellgröße der Regelungseinrichtung, des Schweißstroms und der Schweißspannung eines erfindungsgemäßen Schweißprozesses, bei dem die Abschmelzleistung des Schweißdrahts im Wesentlichen konstant gehalten wird.

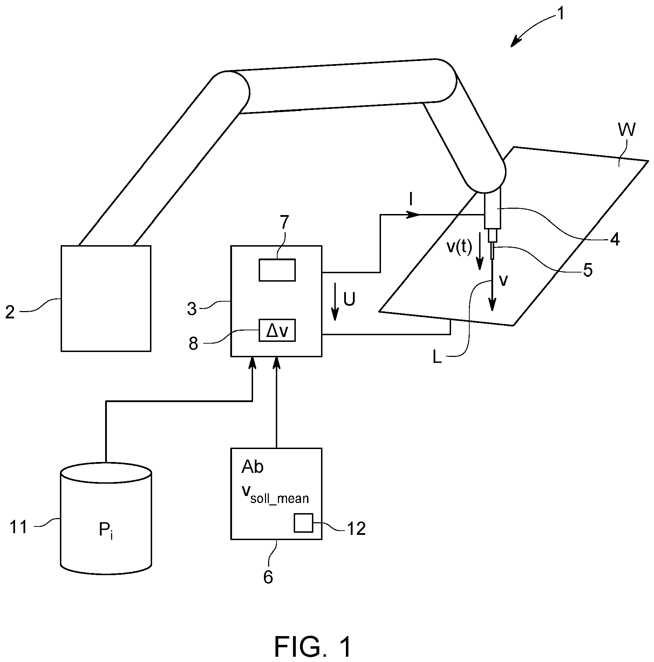

Fig. 1 zeigt ein Blockschaltbild einer Schweißvorrichtung 1 mit einem von einem Schweißroboter 2 geführten Schweißbrenner 4 zur Zuführung eines abschmelzbaren Schweißdrahts 5 zu einem Werkstück W. Der abschmelzbare Schweißdraht 5 wird über eine Schweißstromquelle 3 mit einem entsprechenden Schweißstrom I und eine entsprechende Schweißspannung U zur Bildung eines Lichtbogens L zwischen dem freien Ende des Schweißdrahts 5 und dem Werkstück W versorgt. Beim Schweißverfahren handelt es sich insbesondere um ein sogenanntes Kalt-Metall-Transfer (Cold Metal Transfer CMT)-Schweißverfahren, wobei ein Schweißprozess durch zyklische Abwechslung einer Lichtbogenphase und einer Kurzschlussphase gebildet wird. Während der Lichtbogenphase wird der Schweißdraht 5 bis zur Berührung mit dem Werkstück W mit einem Drahtvorschub v(t) in Richtung Werkstück W bewegt und anschließend nach Bildung eines Kurzschlusses während der Kurzschlussphase wird die Drahtförderung umgekehrt und der Schweißdraht 5 vom Werkstück W wegbewegt. Zur Festlegung des Schweißprozesses wird eine Vielzahl von Schweißparametern Pᵢ eingestellt. Insbesondere beim Auftragsschweißen und bei der additiven Fertigung ist es wichtig, eine konstante Abschmelzleistung des Schweißdrahts 5 zu erzielen, sodass die Dicke des aufgetragenen metallischen Materials im Wesentlichen konstant bleibt. Es soll daher der mittlere Drahtvorschub vₘₑₐₙ entsprechend der gewünschten und voreingestellten Abschmelzleistung Ab des Schweißdrahts 5 im Wesentlichen konstant bleiben. Über eine Eingabeeinheit 6, welche auch in der Schweißstromquelle 3 integriert sein kann, wird die gewünschte Abschmelzleistung Ab des Schweißdrahts 5 bzw. der gewünschte mittlere Drahtvorschub v_{soll_mean} des Schweißdrahts 5 eingestellt oder ausgewählt. Beim Auftragsschweißen wäre auch die Auswahl oder Einstellung der gewünschten Dicke der aufzutragenden Materialschicht möglich, wobei hier auch die Geschwindigkeit des Schweißroboters 2 vorzugeben wäre. Eine Messeinrichtung 7, die in der Schweißstromquelle 3 oder in einer von der Schweißstromquelle 3 getrennten Drahtvorschubeinheit (nicht dargestellt) angeordnet sein kann, überwacht den aktuellen Drahtvorschub v(t) und vergleicht diesen mit einem der voreingestellten Abschmelzleistung Ab entsprechenden vorgegebenen mittleren Drahtvorschub v_{soll_mean}. Je nach Abweichung wird dann in einer Regelungseinrichtung 8 der mittlere Drahtvorschub vₘₑₐₙ des Schweißdrahts 5 geregelt, indem die Schweißparameter Pᵢ entsprechend der Abweichung Δv des mittleren gemessenen Drahtvorschubs vₘₑₐₙ vom vorgegebenen mittleren Drahtvorschub v_{soll_mean} als Regelabweichung verändert werden. Die Regelungseinrichtung 8 kann in der Schweißstromquelle 3 oder auch außerhalb der Schweißstromquelle 3 angeordnet sein. Es erfolgt also in Abhängigkeit der Abweichung Δv eine Verschiebung des Arbeitspunktes bzw. eine Verschiebung der Schweißkennlinie. Die Schweißparameter Pᵢ sind vorzugsweise in einer entsprechenden Datenbank 11 abgespeichert. Zwischen den abgespeicherten Schweißparametern Pᵢ erfolgt eine entsprechende Interpolation der Werte.

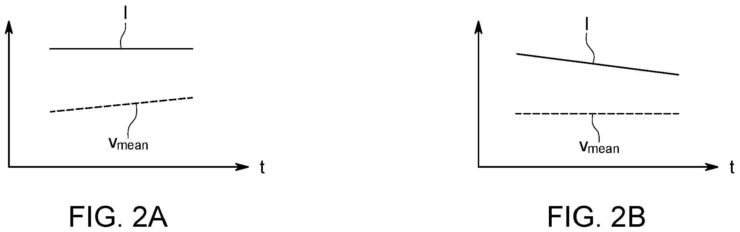

Fig. 2A und 2B zeigt eine Gegenüberstellung der bisherigen Regelstrategie und der neuen Regelstrategie. Fig. 2A zeigt die bisherige Regelung, bei welcher der Schweißstrom I in Abhängigkeit der Zeit t im Wesentlichen konstant gehalten wird und der mittlere Drahtvorschub vₘₑₐₙ dementsprechend angepasst wird, um den konstanten Verlauf des Schweißstroms I zu erzielen. Fig. 2B zeigt die erfindungsgemäße Regelung einer konstanten Abschmelzleistung Ab des Schweißdrahts bzw. eine Regelung eines konstanten Drahtvorschubs vₘₑₐₙ. Der Schweißstrom I wird so verändert, dass der im Wesentlichen konstante mittlere Drahtvorschub vₘₑₐₙ erzielt werden kann. In den Abbildungen ist neben dem mittleren Drahtvorschub vₘₑₐₙ lediglich der Schweißstrom I als ein repräsentativer Schweißparameter Pᵢ dargestellt. In der Realität wird der Schweißprozess allerdings von einer Vielzahl an Schweißparametern Pᵢ festgelegt, welche zur Konstanthaltung der Abschmelzleistung Ab bzw. des mittleren Drahtvorschubs vₘₑₐₙ entsprechend verändert werden.

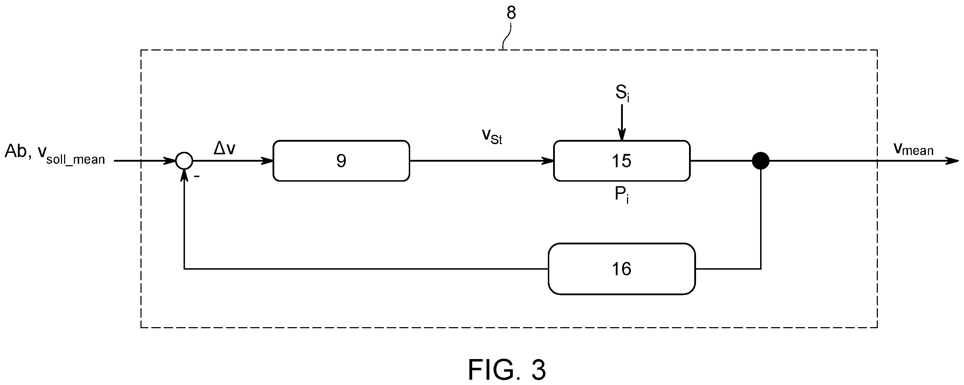

Fig. 3 zeigt eine Ausführungsform einer Regelungseinrichtung 8 mit einem I-Regler 9. Als Führungsgröße des Regelkreises dient die gewünschte Abschmelzleistung Ab des abschmelzbaren Schweißdrahts 5 bzw. der entsprechende vorgegebene mittlere Drahtvorschub v_{soll_mean}., welche mit dem gemessenen mittleren Drahtvorschub vₘₑₐₙ, der allenfalls in einem Konvertierer 16 umgewandelt wird, verglichen wird. Die resultierende Regelabweichung Δv als Differenz des vorgegebenen mittleren Drahtvorschubs v_{soll_mean} und des mittleren gemessenen Drahtvorschubs vₘₑₐₙ wird dem Regler, der hier durch den integrierenden Regler (I-Regler) 9 gebildet ist, zugeführt. Die entsprechende Stellgröße v_{St} wird dann der Regelstrecke 15 zugeführt, wo die Schweißparameter Pᵢ so verändert werden, dass die Regelgröße, der mittlere Drahtvorschub vₘₑₐₙ, möglichst dem gewünschten Wert entspricht. Auf die Regelstrecke 15 wirken bei einem realen Schweißprozess natürlich Störgrößen Sᵢ ein. Bei diesen Störgrößen handelt es sich beispielsweise um die freie Drahtlänge (Sickout) des Schweißdrahts, den Abstand des Kontaktrohrs des Schweißbrenners zum Werkstück (CTWD Contact Tip to Work Distance), die Temperatur, den Anstellwinkel des Schweißbrenners 4, das Schutzgas, Verunreinigungen, die Schweißgeschwindigkeit, und vieles mehr. Die erfindungsgemäße Regelungseinrichtung 8 ermöglicht somit die Konstanthaltung einer gewünschten Abschmelzleistung Ab des abschmelzbaren Schweißdrahts 5 durch entsprechende Anpassung bzw. Veränderung der Schweißparameter Pᵢ. Der I-Regler 9 im Regelkreis bringt die Regelgröße, also den mittleren Drahtvorschub vₘₑₐₙ, auf den Sollwert v_{soll_mean}, ohne dass eine Regeldifferenz verbleibt. Durch die Integration der Regelabweichung Δv im I-Regler 9 wird eine längere Ausregelungszeit benötigt, was aber bei der gegenständlichen Anwendung keinen Nachteil bewirkt.

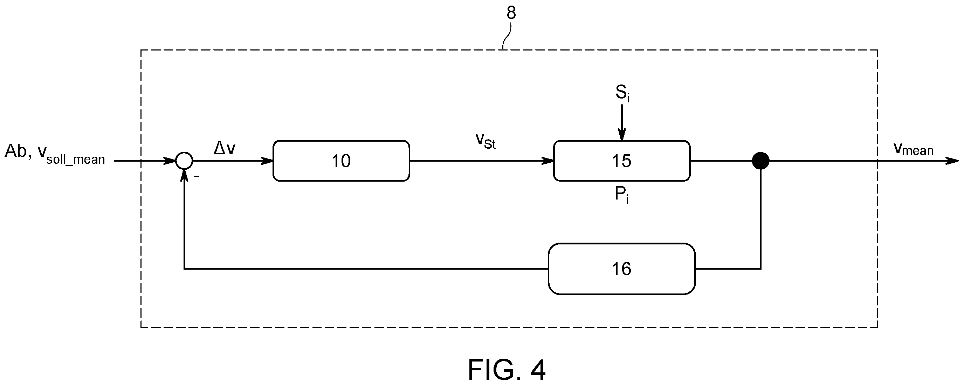

Fig. 4 zeigt eine weitere Ausführungsform einer Regelungseinrichtung 8, wobei anstelle des I-Reglers 9 gemäß Fig. 3 ein proportionaler-integrierender Regler (PI-Regler) 10 angeordnet ist. Im Gegensatz zum I-Regler 9 ist der PI-Regler 10 etwas schneller. Im Übrigen ist die Beschreibung der Fig. 3 entsprechend auf die Fig. 4 anzuwenden.

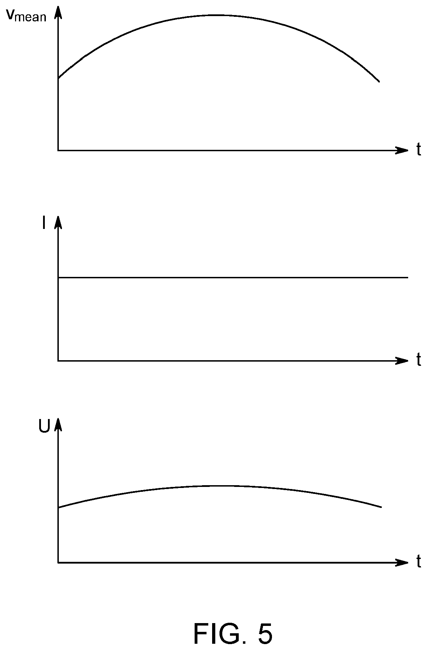

Fig. 5 zeigt die zeitlichen Verläufe des mittleren Drahtvorschubs vₘₑₐₙ, des Schweißstroms I und der Schweißspannung U eines Schweißprozesses des Standes der Technik, bei dem der Schweißstrom I im Wesentlichen konstant gehalten wird. Dementsprechend werden andere Schweißparameter Pᵢ, hier die Schweißspannung U und der mittlere Drahtvorschub vₘₑₐₙ, so verändert, dass der gewünschte konstante Verlauf des Schweißstroms I erzielt werden kann. Bei einem realen Schweißprozess ist eine Vielzahl an Schweißparametern Pᵢ für die Festlegung des Schweißprozesses erforderlich und in Form von Arbeitspunkten oder Schweißkennlinien gespeichert, welche je nach Anwendung entsprechend angepasst werden müssen, um das gewünschte Schweißergebnis erzielen zu können.

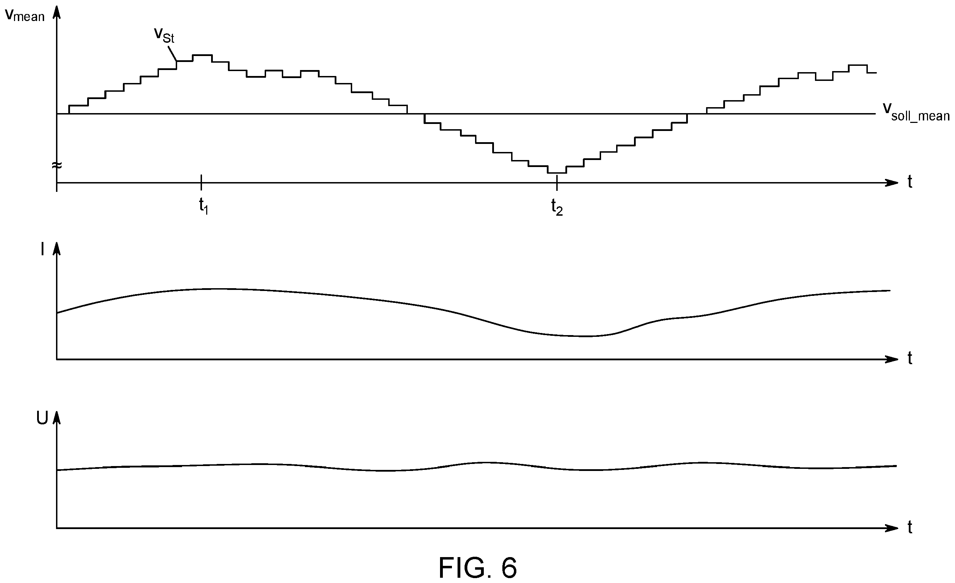

Fig. 6 zeigt nun die zeitlichen Verläufe der Stellgröße v_{St} der Regelungseinrichtung, des Schweißstroms I und der Schweißspannung U eines erfindungsgemäßen Schweißprozesses, bei dem die Abschmelzleistung Ab des abschmelzbaren Schweißdrahts 5 im Wesentlichen konstant gehalten wird. Die horizontale Linie beim zeitlichen Verlauf des mittleren Drahtvorschubs vₘₑₐₙ stellt den Sollwert des vorgegebenen mittleren Drahtvorschubs v_{soll_mean} dar, welcher der gewünschten Abschmelzleistung Ab des abschmelzbaren Schweißdrahts 5 entspricht, und der im Wesentlichen konstant gehalten werden soll. Die Abschmelzleistung Ab entspricht der Menge abgeschmolzenen Materials des Schweißdrahts 5 je Zeiteinheit und kann äquivalent auch durch einen bestimmten mittleren Drahtvorschub v_{soll_mean} beschrieben werden. Unter der Voraussetzung einer gleichmäßigen Schweißgeschwindigkeit resultiert bei einer konstanten Abschmelzleistung Ab eine gleichmäßige Dicke der Schweißnaht oder beim Auftragsschweißen und bei der additiven Fertigung eine gleichmäßige Dicke der aufgetragenen Materialschicht. Im dargestellten Beispiel wird beispielsweise der Abstand des Schweißbrenners vom Werkstück (CTWD Contact Tip to Work Distance) als Störgröße von beispielsweise 10 mm (Zeitpunkt t₁) auf 20 mm (Zeitpunkt t₂) und anschließend (ab Zeitpunkt t₂) wieder auf 10 mm reduziert. Durch entsprechende Einstellung der Stellgröße v_{St} der Regelungseinrichtung 8 wirkt der Regler dieser Störgröße entgegen, um die Regelgröße und somit die vorgegebene Abschmelzleistung Ab bzw. den gewünschten Sollwert des Drahtvorschubs v_{soll_mean} konstant halten zu können. Bei steigendem CTWD ab Zeitpunkt tᵢ würde die Abschmelzleistung Ab steigen. Um dem entgegenzuwirken, wird die Stellgröße v_{St} des Reglers, also die Vorgabe des Drahtvorschubs stufenweise reduziert, und auch der Schweißstrom I gesenkt. Dementsprechend wird der Arbeitspunkt entsprechend verändert, um den Sollwert des Drahtvorschubs halten zu können. Bei der anschließenden Reduktion des CTWD als Störgröße ab Zeitpunkt t₂ wird wiederum die Stellgröße v_{St} der Regelungseinrichtung schrittweise erhöht und der Schweißstrom gesteigert, wodurch die gewünschte Regelgröße konstant gehalten werden kann. Dementsprechend wird die Stellgröße der Reglers wieder stufenweise erhöht und der Schweißstrom I erhöht bzw. der Arbeitspunkt entsprechend verschoben, um die Abschmelzleistung Ab des Schweißdrahts 5 konstant halten zu können. Im dargestellten Beispiel erfolgt beispielsweise alle 100 ms eine Änderung der Stellgröße v_{St}. Der mittlere Drahtvorschub vₘₑₐₙ ist hier in stark vergrößertem Maßstab dargestellt. In der Realität sind nicht nur die dargestellten Schweißparameter Pᵢ, sondern eine Vielzahl an Schweißparametern Pᵢ für die Festlegung des Schweißprozesses erforderlich, welche entsprechend angepasst werden müssen, um das gewünschte Schweißergebnis erzielen zu können.

## Patentansprüche

1. Schweißverfahren, insbesondere Kalt-Metall-Transfer (Cold Metal Transfer CMT)-Schweißverfahren zum Auftragsschweißen, mit einem abschmelzbaren Schweißdraht (5), der einem von einem Schweißroboter (2) geführten Schweißbrenner (4) zugeführt wird, wobei ein Schweißprozess durch zyklische Abwechslung einer Lichtbogenphase und einer Kurzschlussphase gebildet wird, und der Schweißdraht (5) während der Lichtbogenphase bis zur Berührung mit einem Werkstück (W) in Richtung Werkstück (W) bewegt und anschließend nach Bildung eines Kurzschlusses während der Kurzschlussphase die Drahtförderung umgekehrt und der Schweißdraht (5) vom Werkstück (W) wegbewegt wird, und wobei zur Festlegung des Schweißprozesses eine Vielzahl von Schweißparametern (Pᵢ) eingestellt werden, **dadurch gekennzeichnet, dass** während des Schweißprozesses eine voreingestellte Abschmelzleistung (Ab) des Schweißdrahts (5) im Wesentlichen konstant gehalten wird, indem der mittlere Drahtvorschub (vₘₑₐₙ) des Schweißdrahts (5) geregelt wird, wobei der aktuelle Drahtvorschub (v(t)) gemessen wird, der mittlere gemessene Drahtvorschub (vₘₑₐₙ) mit einem der gewünschten Abschmelzleistung (Ab) entsprechenden vorgegebenen mittleren Drahtvorschub (v_{soll_mean}) verglichen wird, und entsprechende der Abweichung (Δv) des mittleren gemessenen Drahtvorschubs (vₘₑₐₙ) vom vorgegebenen mittleren Drahtvorschub (v_{soll_mean}) als Regelabweichung Schweißparameter (Pᵢ) verändert werden.

2. Schweißverfahren nach Anspruch 1, **dadurch gekennzeichnet, dass** die Schweißparameter (Pᵢ) in Form von Arbeitspunkten für verschiedene Abschmelzleistungen (Ab) gespeichert werden und entsprechend der Regelabweichung ausgewählt bzw. zwischen den Arbeitspunkten interpoliert werden.

3. Schweißverfahren nach Anspruch 1 oder 2, **dadurch gekennzeichnet, dass** der aktuelle Drahtvorschub (v(t)) alle 1 µs bis 50 µs gemessen wird.

4. Schweißverfahren nach Anspruch 3, **dadurch gekennzeichnet, dass** der gemessene aktuelle Drahtvorschub (v(t)) über eine Zeitspanne zwischen 10 ms bis 1000 ms insbesondere blockweise oder gleitend, gemittelt wird.

5. Schweißverfahren nach einem der Ansprüche 1 bis 4, **dadurch gekennzeichnet, dass** entsprechend der Regelabweichung der Schweißstrom (I), die freie Drahtlänge des Schweißdrahts (5), der Abstand des Kontaktrohrs des Schweißbrenners zum Werkstück (CTWD Contact Tip to Work Distance), und bzw. oder der Anstellwinkel des Schweißbrenners (4) als Schweißparameter (Pᵢ) verändert werden.

6. Schweißverfahren nach einem der Ansprüche 1 bis 5, **dadurch gekennzeichnet, dass** der mittlere Drahtvorschub (vₘₑₐₙ) mit einer maximal vorgegebenen Anstiegsgeschwindigkeit geregelt wird.

7. Schweißverfahren nach einem der Ansprüche 1 bis 6, **dadurch gekennzeichnet, dass** der mittlere Drahtvorschub (vₘₑₐₙ) mit einer Hysterese geregelt wird.

8. Schweißverfahren nach einem der Ansprüche 1 bis 7, **dadurch gekennzeichnet, dass** die Schweißgeschwindigkeit (x(t)) verändert wird, wenn Regelgrenzen für die Regelung des mittleren Drahtvorschubs (vₘₑₐₙ) erreicht werden.

9. Schweißverfahren nach einem der Ansprüche 1 bis 8, **dadurch gekennzeichnet, dass** die Regelung des mittleren Drahtvorschubs (vₘₑₐₙ) deaktiviert wird.

10. Schweißvorrichtung (1), mit einem von einem Schweißroboter (2) geführten Schweißbrenner (4) zur Zuführung eines abschmelzbaren Schweißdrahts (5) zu einem Werkstück (W), und mit einer Schweißstromquelle (3) zur Durchführung eines Schweißverfahrens, insbesondere Kalt-Metall-Transfer (Cold Metal Transfer CMT)-Schweißverfahrens zum Auftragsschweißen, wobei ein Schweißprozess durch zyklische Abwechslung einer Lichtbogenphase und einer Kurzschlussphase gebildet wird, und der Schweißdraht (5) während der Lichtbogenphase bis zur Berührung mit einem Werkstück (W) in Richtung Werkstück (W) bewegt und anschließend nach Bildung eines Kurzschlusses während der Kurzschlussphase die Drahtförderung umgekehrt und der Schweißdraht (5) vom Werkstück (W) wegbewegt wird, und wobei zur Festlegung des Schweißprozesses eine Vielzahl von Schweißparametern (Pᵢ) einstellbar sind, **dadurch gekennzeichnet, dass** eine Eingabeeinheit (6) zur Eingabe oder Auswahl einer gewünschten Abschmelzleistung (Ab) des Schweißdrahts (5), eine Messeinrichtung (7) zur Messung des aktuellen Drahtvorschubs (v(t)) und eine Regelungseinrichtung (8) zur Regelung des mittlere Drahtvorschub (vₘₑₐₙ) des Schweißdrahts (5) zur Konstanthaltung der gewünschten Abschmelzleistung (Ab) vorgesehen ist, wobei die Regelungseinrichtung (8) zum Vergleich des mittleren gemessenen Drahtvorschubs (vₘₑₐₙ) mit einem der voreingestellten Abschmelzleistung (Ab) entsprechenden vorgegebenen mittleren Drahtvorschub (v_{soll_mean}) und zur Veränderung von Schweißparametern (Pᵢ) entsprechend der Abweichung (Δv) des mittleren gemessenen Drahtvorschubs (vₘₑₐₙ) vom vorgegebenen mittleren Drahtvorschub (v_{soll_mean}) als Regelabweichung ausgebildet ist.

11. Schweißvorrichtung (1) nach Anspruch 10, **dadurch gekennzeichnet, dass** eine mit der Regelungseinrichtung (8) verbundene Datenbank (11) zur Ablage der Schweißparameter (Pᵢ) in Form von Arbeitspunkten für verschiedene Abschmelzleistungen (Ab) vorgesehen ist.

12. Schweißvorrichtung (1) nach Anspruch 11 oder 12, **dadurch gekennzeichnet**, das die Regelungseinrichtung (8) einen integrierenden Regler (9) oder einen proportionalen-integrierenden Regler (10) aufweist.

13. Schweißvorrichtung nach einem der Ansprüche 10 bis 12, **dadurch gekennzeichnet, dass** die Regelungseinrichtung (8) zur Veränderung des Schweißstroms (I), der freien Drahtlänge des Schweißdrahts (5), des Abstands des Kontaktrohrs des Schweißbrenners zum Werkstück (CTWD Contact Tip to Work Distance), und bzw. oder des Anstellwinkels des Schweißbrenners (4) als Schweißparameter (Pᵢ) entsprechend der Regelabweichung ausgebildet ist.

14. Schweißvorrichtung (1) nach einem der Ansprüche 10 bis 13, **dadurch gekennzeichnet, dass** die Regelungseinrichtung (8) mit dem Schweißroboter (2) verbunden ist, sodass die Schweißgeschwindigkeit (x(t)) bei Erreichen von Regelungsgrenzen für die Regelung des mittleren Drahtvorschubs (vₘₑₐₙ) veränderbar ist.

15. Schweißvorrichtung (1) nach einem der Ansprüche 10 bis 14, **dadurch gekennzeichnet, dass** die Eingabeeinheit (6) ein Einstellorgan (12) zur Deaktivierung der Regelungseinrichtung (8) aufweist.
